(19) **Europäisches Patentamt**

**European Patent Office**

**Office européen des brevets**

(11) **EP 1 581 803 B1**

(12) **EUROPÄISCHE PATENTSCHRIFT**

(45) Veröffentlichungstag und Bekanntmachung des Hinweises auf die Patenterteilung:
**12.07.2006 Patentblatt 2006/28**

(51) Int Cl.:
*G01N 21/88* (2006.01)   *G01B 11/30* (2006.01)
*G01B 11/25* (2006.01)

(21) Anmeldenummer: **03815048.8**

(22) Anmeldetag: **21.07.2003**

(86) Internationale Anmeldenummer:
**PCT/EP2003/007920**

(87) Internationale Veröffentlichungsnummer:
**WO 2004/063732 (29.07.2004 Gazette 2004/31)**

(54) **VERFAHREN UND VORRICHTUNG ZUR ERKENNUNG VON OBERFLÄCHENFEHLERN AN WERKSTÜCKEN ODER BAUTEILEN MIT GLÄNZENDEN OBERFLÄCHEN**

METHOD AND DEVICE FOR DETECTING SURFACE DEFECTS ON WORKPIECES OR COMPONENTS HAVING A SHINY SURFACE

PROCEDE ET DISPOSITIF DE DETECTION DE DEFAUTS DE SURFACE SUR DES PIECES OU DES COMPOSANTS PRESENTANT DES SURFACES BRILLANTES

(84) Benannte Vertragsstaaten:
**AT CH DE FR GB IT LI**

(30) Priorität: **08.01.2003   DE 10300482**

(43) Veröffentlichungstag der Anmeldung:
**05.10.2005   Patentblatt 2005/40**

(73) Patentinhaber: **Braun, Uwe Peter, Dipl.-Ing.
19309 Lenzen (DE)**

(72) Erfinder: **Braun, Uwe Peter, Dipl.-Ing.
19309 Lenzen (DE)**

(74) Vertreter: **Meyer, Hans-Joachim et al
COHAUSZ & FLORACK
Patent- und Rechtsanwälte
Bleichstrasse 14
40211 Düsseldorf (DE)**

(56) Entgegenhaltungen:
**US-A- 4 742 237       US-A- 4 792 232
US-A- 6 100 990**

Printed by Jouve, 75001 PARIS (FR)

## Beschreibung

Die Erfindung betrifft ein Verfahren zur Erkennung von Oberflächenfehlern an Werkstücken, oder Bauteilen, insbesondere an lackierten Fahrzeugoberflächen oder Mikrochips, bei dem mittels einer eine Lichtquelle aufweisenden Projektionsvorrichtung ein Reflexbild in Form eines hellere und dunklere Bildstreifen aufweisenden. Gitterbildes auf einer zu prüfenden Oberfläche erzeugt, das Gitterbild mittels mindestens einer Kameravorrichtung erfasst und die von.der Kameravorrichtung erfasste Gestalt des Gitterbildes als Messsignal einer Rechneranlage zugeführt wird, wobei das Gitterbild mit mindestens einer dreidimensionalen optischen Struktur erzeugt wird, die parallel zueinander verlaufende. Streifen oder Kanten aufweist, welche zueinander einen definierten Abstand besitzen, wobei der Abstand der Bildstreifen des Gitterbildes gemessen und in der Rechneranlage auf der Grundlage das definierten Abstandes der parallelen Streifen oder Kanten die Oberflächenstruktur der zu prüfenden Oberfläche berechnet wird, und wobei in der Rechneranlage auf der Grundlage des Messsignals Oberflächenfehler bestimmt und/oder durch Vergleich mit mindestens einem gespeicherten Referenzmuster als relevante, eine Nachbearbeitung erfordernde Oberflächenfehler erkannt werden.

Ferner betrifft die Erfindung eine Vorrichtung zur Erkennung von Oberflächenfehlern an Werkstücken oder Bauteilen mit glänzenden bzw, lichtreflektierenden Oberflächen. Die. Vorrichtung umfasst eine eine Lichtquelle aufweisende Projektionsvorrichtung, die mit mindestens einer optischen Struktur ausgestattet ist, mittels welcher ein Gitterbild aus helleren und dunkleren Bildstreifen auf einer zu prüfenden Oberfläche erzeugbar ist, mindestens eine auf die zu prüfende Oberfläche gerichtete Kameravorrichtung zur Erfassung des reflektierten Lichtes als Abbildung des Gitterbildes unter einem definierten Winkel und zur Abgabe eines entsprechenden Messsignals, und eine mit der Projektionsvorrichtung und der Kameravorrichtung verbundene Rechneranlage zur Auswertung des von der Kameravorrichtung abgegebenen Messsignals zur Bestimmung relevanter, nachzubearbeitender Oberflächenfehler, wobei die optische Struktur mittels welcher ein Gitterbild aus helleren und dunkleren Bildstreifen auf der zu prüfenden Oberfläche erzeugbar ist, parallel zueinander verlaufende, einen definierten Abstand zueinander aufweisende Streifen oder Kanten besitzt, und wobei die Rechneranlage geeignet ist zur Ermittlung des Abstandes der Bildstreifen des Gitterbildes und zur Berechnung der Oberflächenstruktur der zu prüfenden Oberfläche auf der Grundlage des definierten Abstandes der parallelen Streifen oder Kanten der optischen Struktur.

Insbesondere Fahrzeugkarosserien, die vom Karosserierohbau zur Lackieranlage bzw. von der Lackieranlage zu einem nachgeschalteten Montageband transportiert werden, weisen regelmäßig Oberflächenfehler auf, die ohne eine Nachbearbeitung von Runden als Qualitätsmangel erkannt werden würden. Typische Oberflächenfehler sind beispielsweise Dellen, Beulen, Kratzer, anhaftende Schmutzteilchen, so genannte Lacknasen, usw.. Es ist daher erforderlich, solche Oberflächenfehler festzustellen und zu beheben.

Es sind bereits verschiedene Verfahren und Vorrichtungen zur visuellen Qualitätskontrolle glänzender Oberflächen vorgeschlagen worden. In der DE 40 41 166 C2 ist ein Prüfraum beschrieben, in dem auf einer zu prüfenden Oberfläche, insbesondere einer lackierten Fahrzeugkarosserie, Reflexbilder mit Hilfe mehrerer Leuchtstofflampen aufweisender Prüfleuchten erzeugt werden. Dabei spiegeln sich die von den Prüfleuchten auf die Fahrzeugkarosserie geworfenen Bilder der Leuchtstoffröhren in den glänzenden Teilen der Fahrzeugkarosserie und lassen Lackfehler und andere Oberflächenfehler, wie etwa Dellen, deutlich auf den.lackierten Oberflächen hervortreten, so dass diese von entsprechend geschultem Pzüfpersanal erkannt werden können. Diese Art der Oberflächenprufung ist jedoch unbefriedigend, da sie relativ schwierig und arbeitsaufwendig ist und von der subjektiven Beurteilung der jeweiligen Prüfperson abhängt, so dass relevante Oberflächenfehler mitunter nicht erkannt werden.

Ein Verfahren zur automatisierten Erkennung von Oberflächenfehlern an Rohkarosserien sowie eine Vorrichtung zur Durchführung des Verfahrens sind aus der DE 197 30 885 A1 bekannt. Dabei wird die zu prüfende Rohkarosserie auf einem Fördermittel gesteuert durch eine optische Messvorrichtung transportiert, die eine Projektionsvorrichtung mit mehreren Strahlern und eine Kameravorrichtung mit mehreren Zeilenkameras umfasst. Die Strahler erzeugen einen scheibenförmigen Lichttunnel als Lichtvorhang mit einem definierten Gitterbild aus helleren und dunkleren Gitterbildpunkten als Messstreifen auf der Oberfläche der Rohkarosserie. Das als Abbildung der Gitterbildpunkte reflektierte Licht (Reflexbild) wird durch die Zeilenkameras unter einem definierten Winkel erfasst und als entsprechendes Messsignal an eine Rechneranlage abgegeben. In der Rechneranlage werden auf der Grundlage des Messsignals mit bekannten Triangulationsmethoden gegebenenfalls unter Berücksichtigung von räumlichen Phasenverschiebungen Oberflächenunebenheiten bestimmt und durch Vergleich mit in der Rechneranlage abgelegten Fehlermustern als relevante, eine Nacharbeit erfordernde Oberflächenfehler erkannt. Im einzelnen werden dabei die mit der optischen Messvorrichtung erfassten Messdaten der Oberflächenunebenheiten wie Tiefe, Ausdehnung, örtliche Frequenz mehrerer, beieinanderliegender Oberflächenunebenheiten an der Rohkarosserie mit den entsprechenden Daten für die abgelegten Fehlermuster verglichen. Für geeignete Messabstände und Reflexionswinkel wird zudem vorgeschlagen, die Strahler und/ oder Zeilenkameras gesteuert schwenkbar an einer Tragstruktur anzuordnen. Die DE 197 30 885 A1 enthält darüber hinaus aber keine näheren Angaben, wie das Gitterbild erzeugt wird und wie die Tiefe und die Ausdehnung von Oberflächenunebenheiten ermittelt werden können.

Die US 6,100,990 offenbart eine Vorrichtung und ein Verfahren zur Prüfung der optischen Qualität eines reflektierenden Produktes, wie etwa einer Windschutzscheibe eines Kraftfahrzeuges, unter Verwendung von Grauskala-Mustern. Dabei werden mittels eines Projektors ein oder mehrere Grauskala-Muster auf eine Referenzebene, wie z.B. eine Scheibe, projiziert, die hinter dem zu prüfenden Produkt (Windschutzscheibe) in einem bestimmten Abstand zu dem Produkt angeordnet ist. Dem zu prüfenden Produkt, das bei der Prüfung seiner optischen Qualität auf einem drehbaren Arbeitstisch angeordnet ist, ist eine Kamera zugeordnet, mit der die von der Referenzebene auf das zu prüfende Produkt reflektierten Grauskala-Muster erfasst werden. Der Projektor und die Kamera sind an einem Computer angeschlossen, mit dem die aufgenommenen Bilder ausgewertet werden.

Die US 4,742,237 offenbart eine Prüfvorrichtung zur Erfassung von Oberflächenfehlern an reflektierenden Werkstücken. Die Prüfvorrichtung umfasst eine Projektionseinrichtung, die aus einer Lichtquelle, einer ein Gitter aufweisenden transparenten Platte und einer Projektionslinse aufgebaut ist. Das Gitter besteht aus zueinander parallelen, gleichbeabstandeten, dunklen und hellen Linien gleicher Breite. Die das Gitter aufweisende transparente Platte ist mit einer Antriebseinrichtung versehen, mittels der die transparente Platte in vertikaler Richtung auf und ab bewegt wird. Das Gitter wird auf eine reflektierende Scheibe projiziert und von dort auf das zu prüfende Werkstück reflektiert. Dem Werkstück ist eine Kamera zugeordnet, mit der ein Bild des reflektierten Gittere aufgenommen wird. Das aufgenommene Bild wird auf einem Monitor angezeigt und in einer mit einem Bildspeicher versehenen Bild-Verarbeitungsvorrichtung mit einem gespeicherten Standardmuster verglichen. Ein Oberflächenfehler an dem zu prüfenden Werkstück ergibt ein deformiertes Gitterbild, das sich mit der Bewegung der das Gitter tragenden Platte ändert. Anhand der Deformation und deren Änderung werden Oberflächenfehler, wie z.B. Dellen oder dergleichen, hinsichtlich ihrer Größe und Form erkannt.

Der vorliegenden Erfindung liegt die Aufgabe zugrunde, ein Verfahren anzugeben, mit dem die Höhe bzw. Tiefe einer Oberflächenstruktur und insbesondere die Abmessungen von Oberflächenfehlern wie Dellen, Beulen, Kratzer, eingebundene Schmutzpartikel usw. an lackierten Fahrzeugkarosserien und anderen glänzenden Werkstücken, Bauteilen bzw. qualicätsrelevanten Oberflächen ermittelt werden können. Ferner soll eine entsprechende Vorrichtung zur Durchführung des Verfahrens angegeben werden.

Diese Aufgabe wird hinsichtlich des Verfahrens durch das in Anspruch 1 definierte Verfahren gelöst. Das erfindungsgemäße Verfahren ist dadurch gekennzeichnet, dass die optische Struktur um definierte Drehwinkel gedreht wird, so dass sich der Abstand von den parallelen Streifen oder Kanten der optischen Struktur zugeordneten Bildstreifen des Gitterbildes zueinander verändert, wobei der jeweils eingestellte Drehwinkel erfasst wird.

Im übrigen wird die oben angegebene Aufgabe durch die im Anspruch 14 definierte Vorrichtung gelost. Die erfindungsgemäße Vorrichtung ist dadurch gekennzeichnet, dass die optische Struktur in Bezug auf die zu prüfende Oberfläche räumlich verstellbar ist zur Veränderung des Abstandes von Bildstreifen des Gitterbildes, die den parallelen Streifen oder Kanten der optischen Struktur zugeordnet sind, wobei die Vorrichtung Mittel zur Verstellung der optischen Struktur um definierte Drehwinkel und zur Erfassung des jeweils eingestellten Drehwinkels umfasst.

Die das Gitterbild erzeugende optische Struktur, die parallel zueinander verlaufende, einen definierten Abstand zueinander aufweisende Streifen Kanten besitzt, lässt sich auf verschiedene Weise realisieren. Insbesondere ist eine dreidimensionale Struktur denkbar, die aus einem aus Glas oder lichtdurchlässigem Kunststoff hergestellten Körper besteht, der parallel zueinander verlaufende Streifen aus lichtundurchlässigem Material aufweist, die in unterschiedlichen Ebenen angeordnet sind. Auch ist eine optische Struktur denkbar, die aus mindestens drei räumlich angeordneten dünnen Drähten, Fäden oder Seilen gebildet ist, welche wiederum parallel zueinander verlaufen und deren Längsachsen die Eckpunkte eines rechtwinkligen Dreiecks definieren. Besonders bevorzugt ist jedoch eine Ausführungsform, bei der die optische Struktur zur Erzeugung des Gitterbildes ein Prisma oder eine Prismenplatte ist.

Hinsichtlich der Erfassung und Berechnung von Oberflächenfehlern ist es vorteilhaft, wenn das Prisma beziehungsweise die Prismen der Prismenplatte jeweils zwei rechtwinklig zueinander angeordnete Kantenflächen aufweist/ aufweisen. Diese Ausgestaltung ermöglicht die Berechnung von Oberflächenfehlern anhand des Euklidischen Lehrsatzes.

Eine andere vorteilhafte Ausgestaltung der Erfindung besteht darin, dass als Lichtquelle eine Stroboskopleuchte in der Projektionsvorrichtung verwendet wird. Hierdurch wird eine schnelle Bildverarbeitung ermöglicht. Zudem können durch diese Ausgestaltung auch schwach reflektierende Oberflächen messtechnisch erfasst und auf Oberflächenfehler hin geprüft werden.

Eine weitere bevorzugte Ausgestaltung der Erfindung besteht darin, dass in der Kameravorrichtung ein an die Größe und/oder. Form eines zu erfassenden Oberflächenfehlers anpassbares Berechnungsgitter automatisch eingestellt wird. Auf diese Weise wird die Zeit zur Berechnung eines erfassten Oberflächenfehler verringert.

Eine vorteilhafte Ausgestaltung der Erfindung besteht ferner darin, dass die Gitterteilung des Berechnungsgitters in Abhängigkeit der Länge der Beugung von Bildstreifen des Gitterbildes eingestellt wird. Je länger die Beugung ist, desto mehr Teilungen werden im Berechnungsgitter vorgesehen. Je feiner die Gitterteilung ist, desto genauer wird die Berechnung. Dieses Gitter wird direkt in der Bildbearbeitungssoftware berücksichtigt und virtuell eingeblendet.

Weitere bevorzugte und vorteilhafte Ausgestaltungen der Erfindung sind in den Unteransprüchen gekennzeichnet.

Nachfolgend wird die Erfindung anhand einer mehrere Ausführungsbeispiele darstellenden Zeichnung näher erläutert. Es zeigen:

Fig. 1    eine schematische Prinzipdarstellung einer erfindungsgemäßen Projektionsvorrichtung mit einem Prisma zur Erzeugung eines Reflexbildes in Form eines Gitterbildes aus helleren und dunkleren Bildstreifen auf einer glänzenden, im wesentlichen fehlerfreien Oberfläche;

Fig. 2    eine schematische Prinzipdarstellung gemäß Fig. 1, wobei drei unterschiedliche Drehstellungen des Prismas und die jeweiligen den Drehstellungen entsprechenden Reflexbilder dargestellt sind;

Fig. 3    eine schematische Darstellung, welche die Berechnung eines Oberflächenfehlers in Form einer Beule veranschaulicht;

Fig. 4    eine schematische Darstellung, welche die Berechnung eines Oberflächenfehlers in Form einer Delle veranschaulicht;

Fig. 5    eine auszugsweise schematische Darstellung von verschiedenen möglichen Oberflächenfehlern mit den jeweiligen Reflexbildern;

Fig. 6    eine schematische Prinzipdarstellung einer erfindungsgemäßen Projektionsvorrichtüng mit einer drehbaren Prismenplatte und einer Kamera;

Fig. 7    eine schematische Darstellung einer erfindungsgemäßen Vorrichtung nach einem ersten Ausführungsbeispiel (Handmessgerät);

Fig. 8    eine schematische Darstellung einer erfindungsgemäßen Vorrichtung nach einem zweiten Ausführungsbeispiel; und

Fig. 9    eine schematische Darstellung einer optischen Struktur zur Erzeugung eines Reflexbildes in Form eines Gitterbildes aus helleren und dunkleren Bildstreifen auf einer glänzenden Oberfläche gemäß einem weiteren Ausführungsbeispiel.

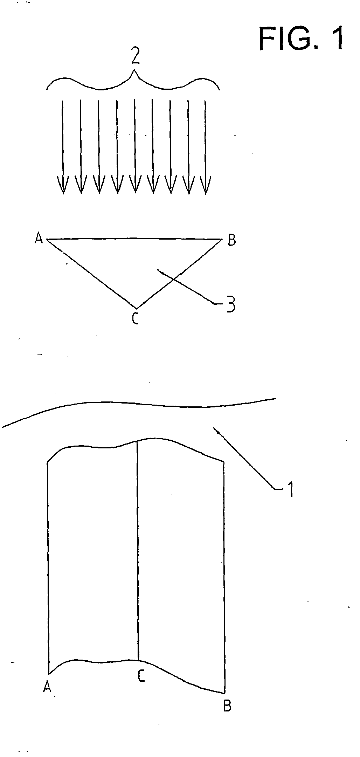

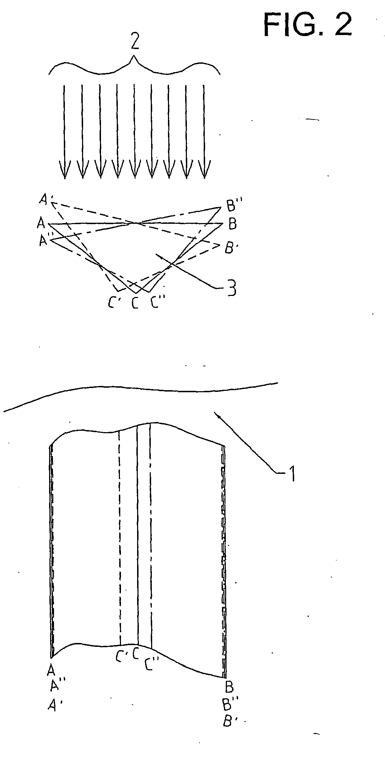

In Fig. 1 ist eine optische Anordnung dargestellt, bei der eine glänzende, im wesentlichen ebene Oberfläche 1 mit Licht 2 bestrahlt wird, wobei zwischen der glänzenden Oberfläche 1 und den darauf gerichteten Lichtstrahlen eine ein Gitterbild erzeugende optische Struktur 3 angeordnet ist. Unter dem Begriff Gitterbild wird im vorliegenden Zusammenhang insbesondere eine dreidimensionale Linienprojektion verstanden.
Bei der glänzenden Oberfläche 1 handelt es sich beispielsweise um einen Abschnitt einer lackierten Fahrzeugkarosserie. Die dreidimensionale optische Struktur 3 besteht aus einem Prisma, das hier als Dreikant-Prisma ausgebildet ist. Die mit A, B und C bezeichneten Kanten des aus Glas oder lichtdurchlässigem Kunststoff bestehenden Prismas 3 verlaufen parallel zueinander. Die Stirnseite des Prismas 3 hat hier die Form eines gleichschenkligen Dreiecks. Es kann allerdings auch ein Prisma verwendet werden, dessen Kantenwinkel unterschiedlich sind bzw. dessen Stirnseite nicht die Form eines gleichschenkligen Dreiecks hat. Vorzugsweise wird jedoch ein Prisma verwendet, das zwei rechtwinklig ausgebildete Kantenflächen aufweist.
Dem Prisma 3 ist eine nicht näher dargestellte Lichtquelle zugeordnet. Der Lichtquelle ihrerseits ist eine optische Vorrichtung zugeordnet, die aus dem von der Lichtquelle ausgehenden Licht gerichtetes oder teilgerichtetes Licht 2 erzeugt. Die optische Vorrichtung kann beispielsweise aus einem parabolförmigen Reflektor bestehen. Das Prisma 3 ist so angeordnet, dass das gerichtete bzw. teilgerichtete Licht 2 auf seine Grundfläche trifft. Bei dem Licht 2 kann es sich insbesondere auch um diffuses Licht handeln.
Die parallelen Kanten A, B und C des Prismas 3 werden in dem auf der glänzenden Oberfläche erzeugten Reflexbild als helle Linien bzw. relativ schmale Bildstreifen abgebildet. Es ist zu erkennen, dass die Abbildungslinien bzw. schmalen Bildstreifen ebenfalls parallel zueinander verlaufen.
Wie in Fig. 2 dargestellt, ist das Prisma 3 gegenüber den Lichtstrahlen und der glänzenden Oberfläche 1 drehbar bzw. schwenkbar gelagert. Der Dreh- bzw. Schwenkbereich beträgt bezogen auf die mittlere Stellung des Prismas jeweils etwa 45° nach rechts und nach links. Der Gesamtschwenkbereich liegt somit bei etwa 90°. Der Dreh- bzw. Schwenkbereich kann allerdings auch kleiner bemessen werden. In Fig. 2 sind drei unterschiedliche Drehstellungen des Prismas 3 dargestellt. Eine mittlere Drehstellung ist - wie in Fig. 1 - mit einer durchgezogenen Dreieckslinie wiedergegeben. Eine zweite Drehstellung, in der das Prisma 3 im Uhrzeigersinn nach links geschwenkt ist, ist mit einer gestrichelten Dreieckslinie wiedergegeben. Eine dritte Drehstellung, in der das Prisma 3 gegen den Uhrzeigersinn nach rechts geschwenkt ist, ist dagegen mit einer punktierten Dreieckslinie wiedergegeben.

Wie in Fig. 2 zu erkennen ist, ändert sich in Abhängigkeit der Drehstellung des Prismas 3 der Abstand der den Kanten des Prismas 3 zugeordneten Abbildungslinien (Bildstreifen) zueinander. Während in der mittleren Drehstellung der Abstand zwischen den Abbildungslinien A und C in etwa dem Abstand zwischen den Abbildungslinien C und B entspricht, haben sich die Abbildungslinien A und C in der durch die gestrichelte Dreieckslinie wiedergegebenen Drehstellung des Prismas 3 aufeinander zu bewegt und die Abbildungslinien C und B von einander entfernt. Zur Verdeutlichung sind die Kanten des Prismas bzw. die zugehörigen Abbildungslinien in dieser Drehstellung mit A', B' und C' bezeichnet. In der durch die gepunktete Dreieckslinie wiedergegebenen Drehstellung des Prismas 3, in der die Kanten des Prismas 3 bzw. die zugehörigen Abbildungslinien mit A'', B'' und C'' bezeichnet sind, ist es dagegen so, dass sich die Abbildungslinien A und C von einander entfernt und die Abbildungslinien C und B aufeinander zu bewegt haben.

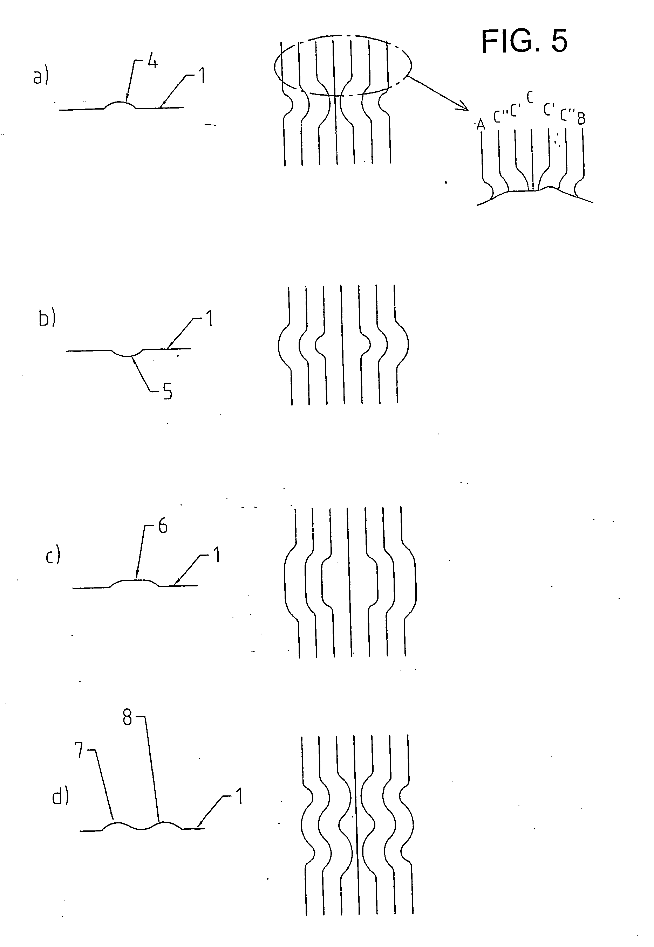

Während in Fig. 2 überlagerte Reflexbilder mit zueinander im wesentlichen parallelen Abbildungslinien dargestellt sind, die sich bei einer Drehung des Prismas 3 in Bezug auf eine glänzende, im wesentlichen fehlerfreie, d.h. keine Unebenheiten aufweisende Oberfläche 2 ergeben, sind in den Fig. 5 a) bis d) vier jeweils überlagerte Reflexbilder schematisch dargestellt, die prinzipiell vier unterschiedlichen Arten von Oberflächenfehler entsprechen und sich bei einer Drehung des Prismas 3 in Bezug auf glänzende Oberflächen 1 mit entsprechenden Oberflächenfehlern ergeben. Dabei entspricht Fig. 5 a) überlagerten Reflexbildern an einer einzelnen kleinen Erhebung 4, etwa einem Lackpickel, Fig. 5 b) überlagerten Reflexbildern an einer einzelnen kleinen Delle 5 oder größeren Lackpore, Fig. 5 c) überlagerten Reflexbildern an einer einzelnen länglichen Erhebung 6, etwa einer Lacknase, und Fig. 5 d) überlagerten Reflexbildern an zwei dicht beieinanderliegenden kleinen Erhebungen 7, 8. Es ist dargestellt, dass die Abbildungslinie C nicht gebeugt ist, wenn sich die zugehörige Kante C des Prismas in dessen mittlerer Drehstellung direkt über dem Scheitelpunkt bzw. Minimum des Oberflächenfehlers befindet. Erst wenn das Prisma aus der mittleren Drehstellung nach links bzw. nach rechts gedreht wird, ergibt sich eine Beugung der Abbildungslinie C, wobei die genaue dreidimensionale Gestalt des Oberflächenfehlers sichtbar wird. In der vergrößerten Detaildarstellung von Fig. 5 a) wird deutlich, wie sich die Form der Abbildungslinie C verändert, wenn das Prisma gedreht bzw. gekippt wird und sich die die Prismakante C repräsentierende Abbildungslinie bei C' und C'' unterschiedlich beugt. Die Beugung entspricht der dreidimensionalen Ausdehnung des Oberflächenfehlers. Dabei wird über die äußeren reflektierten Linien A und B die Grundfläche des Oberflächenfehlers sichtbar. Die Linien C, C' und C'' vermitteln einen dreidimensionalen Eindruck des jeweiligen Oberflächenfehlers, wobei sich die Höhe einer Erhebung, eines Pickels oder einer Lacknase bzw. die Tiefe einer Delle oder eines Kratzers anhand des Beugungszustandes der Abbildungslinien (Abbildungsstreifen) berechnen lassen. Denn der optische Abstand lässt es zü, dass man bezogen auf die geometrischen Daten des Prismas jeden räumlichen Abstand, insbesondere die Höhe bzw. Tiefe einer Oberflächenstruktur 1 errechnen kann.

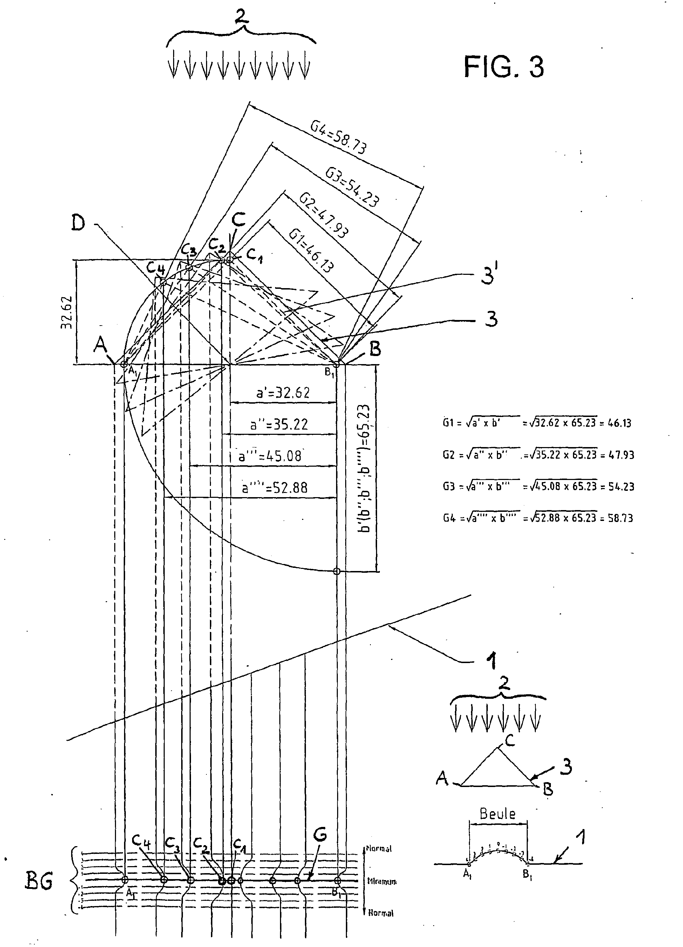

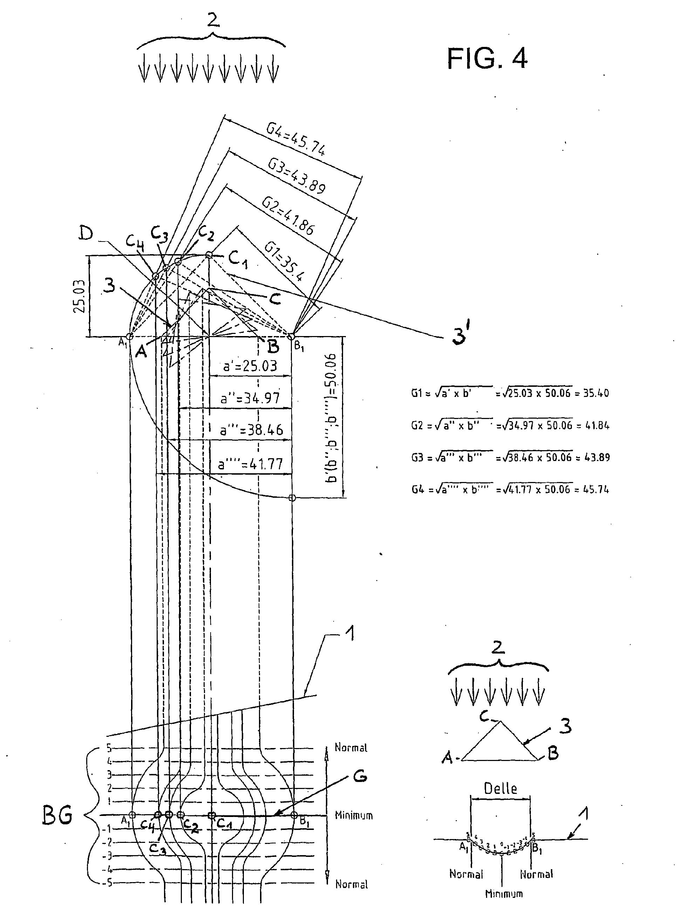

Nachfolgend wird anhand der Figuren 3 und 4 eine bevorzugte Art der Berechnung von Oberflächenfehlern erläutert, wobei sich Figur 3 auf die Erfassung und Berechnung eines Oberflächenfehlers in Form einer Beule bezieht, während Figur 4 den Fall einer Delle veranschaulicht.

Die Berechnung basiert in diesem Ausführungsbeispiel auf dem Satz des Euklid, wonach im rechtwinkligen Dreieck das Quadrat über einer Kathete flächengleich dem Rechteck aus der Hypotenuse und der Projektion der Kathete auf die Hypotenuse ist. Dementsprechend wird ein Dreikantprisma 3 verwendet, das zwei im Wesentlichen rechtwinklig zueinander verlaufende Kantenflächen aufweist. Dem Prisma 3 ist eine nicht näher dargestellte Lichtquelle mit einer optischen Vorrichtung zugeordnet, die aus dem von der Lichtquelle ausgehenden Licht gerichtetes oder teilgerichtetes Licht 2 erzeugt. Das Dreikantprisma 3 ist so angeordnet, dass das Licht 2 auf seine zueinander rechtwinklig verlaufenden Kantenflächen trifft. Das Prisma 3 ist gegenüber den Lichtstrahlen und einer auf Oberflächenfehler zu prüfenden, glänzenden Oberfläche 1 drehbar gelagert. Der Drehpunkt des Prismas 3 ist mit D bezeichnet.

In den Figuren 3 und 4 sind jeweils unten links typische Beugungslinien bzw. Beugungsmuster dargestellt, wie sie sich an einer Beule bzw. Delle einer zu prüfenden glänzenden Oberfläche 1 ergeben, wenn das Prisma um den Drehpunkt D gedreht wird. Ist die rechtwinklige Kante C des Prismas 3 in etwa mittig oberhalb des Oberflächenfehlers angeordnet, so verläuft die dieser Kante zugeordnete Bildlinie (Bildstreifen) des Reflexbildes im wesentlichen gerade. Bei fehlerfreier zu prüfender Oberfläche sind alle Kanten A, B, C des Prismas 3 im wesentlichen als gerade Bildlinien (Bildstreifen) im Reflexbild zu erkennen. Weist die zu prüfende, glänzende Oberfläche 1 jedoch einen Oberflächenfehler in Form einer Delle oder Beule auf, so ergeben sich gekrümmte Beugungslinien.

Das Reflexbild wird mit einer in den Figuren 3 und 4 nicht dargestellten Kameravorrichtung aufgenommen. In der Kameravorrichtung wird ein an die Form sowie Größe des zu erfassenden Oberflächenfehlers anpassbares Berechnungsgitter BG eingestellt. Zur Erfassung einer Delle wird grundsätzlich ein größeres Berechnungsgitter eingestellt als zur Erfassung einer hinsichtlich des Durchmessers gleich großen Beule. Das Berechnungsgitter BG erstreckt sich dabei jeweils mindestens vom Beginn bis zum Ende der längsten Beugung (Bildstreifen-Krümmung), die sich bei der Drehung des Prismas 3 um den Drehpunkt D ergibt. Die Größe des Berechnungsgitters BG wird somit an die jeweiligen Gegebenheiten angepasst. Die Anpassung erfolgt in der erfindungsgemäßen Vorrichtung vorzugsweise automatisch.

Die Teilung des Berechnungsgitters BG ist einstellbar. Je länger die längste Bildstreifen-Krümmung (Beugung) ist, desto kleiner sollte die Gitterteilung sein, d.h. desto mehr Gitterlinien weist das Berechnungsgitter BG auf. Im Übrigen hat die Gitterteilung Einfluss auf die Genauigkeit der Berechnung eines erfassten Oberflächenfehlers. Je feiner die Gitterteilung ist, desto genauer wird die Berechnung. Das Berechungsgitter BG der erfindungsgemäßen Vorrichtung ist somit variabel. Es kann sowohl vergrößert und verkleinert als auch verfeinert und vergröbert werden.

In den Figuren 3 und 4 ist eine erste Stellung des jeweiligen Prismas 3, in welcher die rechtwinklige Kante C sowie der Drehpunkt D des Prismas in etwa mittig oberhalb des jeweiligen Oberflächenfehlers angeordnet ist, in durchgezogener Linie dargestellt. In dieser ersten Stellung verläuft die dieser Kante C zugeordnete Bildlinie (Bildstreifen) des Reflexbildes im Wesentlichen gerade. Die den beiden anderen Kanten A, B des Prismas 3 zugeordneten Bildlinien (Bildstreifen) sind dagegen aufgrund des Oberflächenfehlers in der zu prüfenden Oberfläche 1 gekrümmt.

Die Schnittpunkte $A_1$ , $B_1$ , $C_1$ dieser Bildlinien (Beugungslinien) mit einer im Wesentlichen rechtwinklig zu den Prismakanten A, B, C und über den Mittelpunkt des jeweiligen Oberflächenfehlers verlaufenden Geraden G sind in den Figuren 3 und 4 in den Bereich des jeweiligen Prismas projiziert und zu einem virtuellen Prisma 3' verbunden, das in gestrichelter Linie dargestellt ist. Es ist zu erkennen, dass bei einer Beule das virtuelle Prisma 3' kleiner ist als das tatsächliche Prisma 3 (Fig. 3), während bei einer Delle das virtuelle Prisma 3' größer ist als das tatsächliche Prisma 3 (Fig. 4).

Des weiteren sind die Schnittpunkte $C_2$, $C_3$, $C_4$ der Geraden G mit den der rechtwinkligen Prismakante C zugeordneten Beugungslinien, die sich bei verschiedenen Drehstellungen des Prismas 3 ergeben, in den Bereich des jeweiligen Prismas projiziert, und zwar auf einen Kreisabschnitt, dessen Mittelpunkt im Drehpunkt D des Prismas 3 liegt und dessen Radius dem halben Abstand zwischen den Schnittpunkten $A_1$ , $B_1$ entspricht.

Die auf den Kreisabschnitt projizierten Schnittpunkte $C_2$ , $C_3$ , $C_4$ sind jeweils mit den auf diesem Kreisabschnitt bzw. dessen Verlängerung ebenfalls projizierten Schnittpunkte $A_1$ , $B_1$ durch eine gestrichelte Linie zu rechtwinkligen Dreiecken verbunden. Gemäß dem Satz des Euklid lässt sich die Gleichung

$$G^2 = a \times b \qquad \Leftrightarrow \qquad G = \sqrt{a \times b}$$

aufstellen, wobei G die Länge der Ankathete, a die Länge der auf die Hypotenuse projizierten Ankathete und b die Länge der Hypotenuse des jeweiligen rechtwinkligen Dreiecks ist.

In den Figuren 3 und 4 sind vier verschiedene Drehstellungen des jeweiligen Prismas 3 dargestellt und dementsprechend jeweils vier Berechnungen für die Länge der Ankathete G der rechtwinkligen Dreiecke nach dem Satz des Euklid beispielhaft angegeben:

Diese Beispielrechnungen machen deutlich, dass sich aus den mit der Kameravorrichtung erfassten Abständen von Bildlinien (Bildstreifen) eines Reflexbildes die Höhe bzw. Tiefe eines Oberflächenfehlers sowie dessen flächenmäßige Größe berechnen lassen. Die Berechnung kann dabei in Bezug auf mehrere parallele Geraden eines Berechnungsgitters BG erfolgen kann, wodurch die Genauigkeit der errechneten Form des Oberflächenfehlers entsprechend zunimmt.

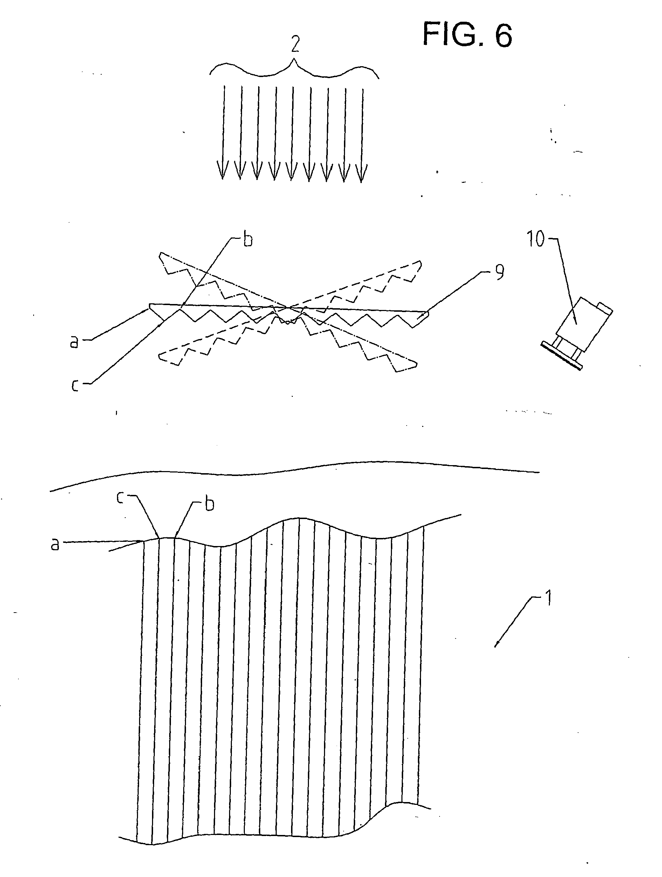

Es versteht sich, dass anstelle eines einzelnen drehbaren Dreikantprismas 3 auch eine drehbare Prismenplatte verwendet werden kann, um die erforderlich Zeit für die Erkennung von Oberflächenfehlern an Werkstücken bzw. Bauteilen mit glänzenden Oberflächen zu minimieren. Dementsprechend ist in Fig. 6 schematisch ein Ausführungsbeispiel dargestellt, bei dem die optische Struktur zur Erzeugung des aus Abbildungslinien bzw. Abbildungsstreifen bestehenden Gitterbildes durch eine Prismenplatte 9 realisiert ist. In jedem Fall ist dem Prisma 3 bzw. der Prismenplatte 9 mindestens eine Kamera 10 zugeordnet, die in einem definierten Winkel in Bezug auf die Richtung der Lichtstrahlen auf den Reflexbildbereich der zu prüfenden Oberfläche 1 gerichtet ist.

Dem schwenkbaren Prisma 3 bzw. der schwenkbaren Prismenplatte 9 ist ein Drehantrieb (nicht gezeigt) zugeordnet, der von einer Rechneranlage (nicht gezeigt) angesteuert wird, an der auch die Steuerung der Lichtquelle sowie die Kameravorrichtung angeschlossen sind. Der jeweils eingestellte Drehwinkel des Prismas 3 bzw. der Prismenplatte 9 wird mittels einer geeigneten Sensorvorrichtung (nicht gezeigt) erfasst, wobei das jeweilige Sensorsignal der Rechneranlage zugeführt wird. Die Rechneranlage weist einen Speicher auf, in dem verschiedene Daten und ein Berechnungsprogramm für die Berechnung der Oberflächenstruktur der zu prüfenden Oberfläche 1 gespeichert sind.

Zu den gespeicherten Daten gehören insbesondere die geometrischen Daten des Prismas 3 bzw. der Prismenplatte 9, wie die Abstände der Prismenkanten bzw. Prismentäler A, B und C sowie die Kantenwinkel, die als solche feststehen. Ferner werden in dem Speicher der Rechneranlage die Daten eines eine fehlerfreie Oberfläche repräsentierenden Referenzmusters gespeichert. So kann eine erfindungsgemäße Prüfvorrichtung mit dem jeweiligen Prisma 3 bzw. der jeweiligen Prismenplatte 9 unter Verwendung einer glänzenden, oberflächenfehlerfreien Präzisionsplatte, insbesondere unter Verwendung eines homogenen Spiegels, geeicht werden und die entsprechenden Messdaten als Referenzmusters in der Rechneranlage gespeichert werden.

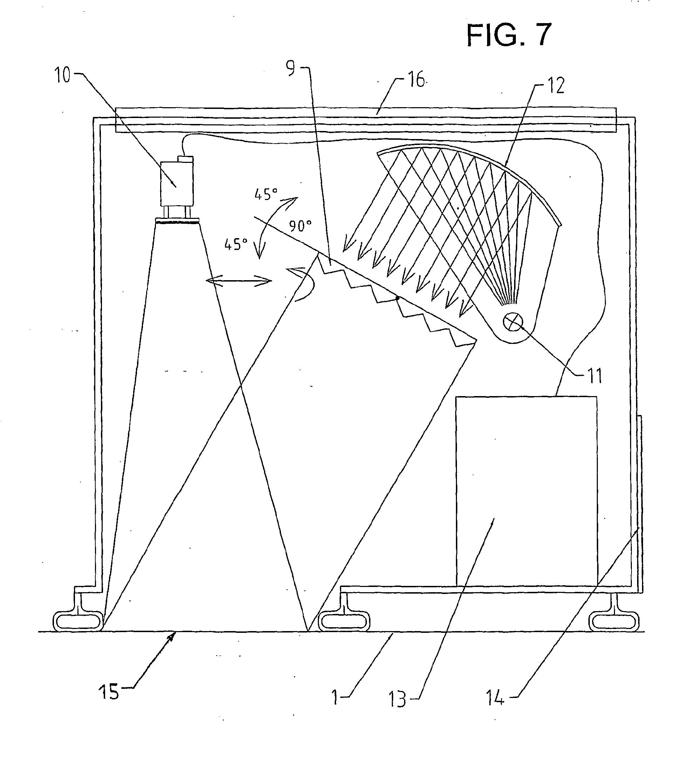

In Fig. 7 ist ein erstes Ausführungsbeispiel einer erfindungsgemäßen Vorrichtung schematisch dargestellt. Mit 11 ist eine Lichtquelle bezeichnet. Der Lichtquelle 11 ist ein parabolförmiger, breitflächiger Reflektor 12 zugeordnet, so dass das von ihr abgestrahlte Licht als gerichtetes oder diffuses Licht auf die Grundfläche der Prismenplatte 9 trifft. Die Prismenplatte 9 ist drehbar gelagert und kann aus einer Mittelstellung nach oben und unten jeweils um etwa 45° verschwenkt werden. Das Verschwenken der Prismenplatte 9 erfolgt mittels eines entsprechenden Drehantriebes (nicht gezeigt). Der Prismenplatte 9 ist eine Digitalkamera 10 zugeordnet, die ebenso wie der Drehantrieb an einer einen Speicher aufweisenden Rechneranlage 13 angeschlossen sind. Die Lichtquelle 11, der Reflektor 12, die Prismenplatte 9, der Drehantrieb und die Kamera 10 sind zusammen in einem Gehäuse 14 montiert, das eine Messöffnung 15 aufweist, die über der auf Oberflächenfehler zu prüfenden Oberfläche 1 anzuordnen ist. Das Gehäuse 14 weist an seiner Außenseite eine mit der Rechneranlage 13 verbundene Anzeigevorrichtung 16 auf, auf der errechnete geometrische Daten der zu prüfenden Oberfläche 1 anzeigbar sind. Durch das Gehäuse 14 ist sichergestellt, dass kein die Messung beeinträchtigendes Streulicht auf den zu prüfenden Bereich der Oberfläche 1 sowie die Prismenplatte 9 und die Kamera 10 fällt.

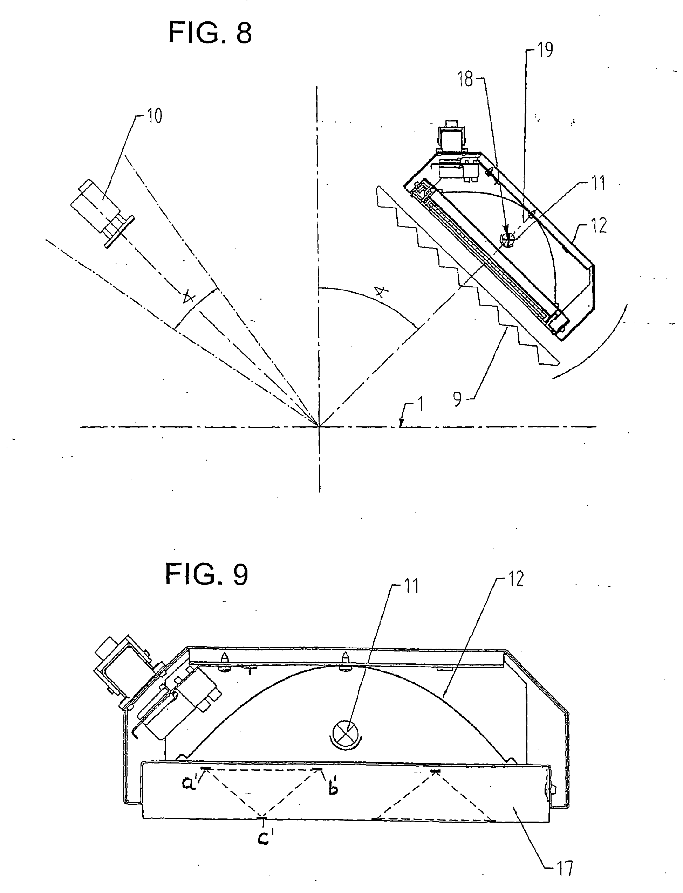

In Fig. 8 ist ein zweites Ausführungsbeispiel einer erfindungsgemäßen Vorrichtung schematisch dargestellt. Es ist zu erkennen, dass bei dieser Ausführungsform nicht nur die Prismenplatte 9, sondern auch die Kamera 10 schwenkbar gelagert ist. Es versteht sich, dass zum Verschwenken der Kamera 10 ein entsprechender Antrieb vorgesehen ist, dessen Steuerung mit der Rechneranlage (nicht gezeigt) verbunden ist. Die Lichtquelle 11 besteht bei dieser Ausführungsform aus einer Stroboskopleuchte. Die Stroboskopleuchte 11 ermöglicht eine schnellere Bildverarbeitung als eine Leuchtstofflampe. Die Vorrichtung legt die Messdaten in einem Zwischenspeicher ab, aus dem sie später über eine Schnittstelle auf einen Personalcomputer übertragen werden können. Dort können Statistiken zu einzelnen Fertigungstagen erstellt werden. Der Lichtquelle 11 sind ein Reflektor 12 und eine Prismenplatte 9 zugeordnet. Die Lichtquelle 11, der Reflektor 12 und die Prismenplatte bilden eine Einheit, die um eine erste Achse 18 und um eine dazu querverlaufende zweite Achse 19 mittels eines Antriebes (nicht gezeigt) drehbar ist.

In Fig. 9 ist ein weiteres Ausführungsbeispiel für eine dreidimensionale optische Struktur zur Erzeugung eines Reflexbildes in Form eines Gitterbildes aus helleren und dunkleren Bildstreifen auf einer zu prüfenden glänzenden Oberfläche schematisch dargestellt. Die optische Struktur besteht hier alternativ aus einem aus Glas oder lichtdurchlässigem Kunststoff hergestellten Körper 17, der mindestens drei parallel zueinander verlaufende Streifen a', b', c' aus lichtundurchlässigem Material aufweist, die auf der Oberseite bzw. der Unterseite des Körpers 17 und somit in unterschiedlichen Ebenen angeordnet sind. Die Streifen a', b', c' können beispielsweise aus dünnen, dunklen Farbstreifen bestehen, die auf den scheibenförmigen Körper aufgedruckt sind. Alternativ können die Streifen auch aus dünnen, opaken Metall- und/oder Kunststoffstreifen bestehen, die auf den scheibenförmigen Körper 17 aufgeklebt sind. Es ist zu erkennen, dass sich die Streifen a', b', c' an der Oberseite und der Unterseite des Körpers 17 abwechseln, so dass drei Streifen von der Stirnseite des Körpers 17 aus betrachtet praktisch die Ecken bzw. Kanten eines Dreiecks definieren, was in Fig. 7 durch die gestrichelte Linie angedeutet ist. Die Streifen a', b', c' sind wie die Kanten A, B, C des Prismas 3 gemäß Fig. 1 bzw. die Kanten a, b, c der Prismenplatte 9 gemäß Fig. 4 in definierten Abständen zueinander angeordnet. Die dargestellte Einheit aus Lichtquelle 11, Reflektor 12 und dreidimensionaler Struktur ist wiederum drehbar gelagert und mit einem Drehantrieb (nicht gezeigt) versehen.

Die optische Struktur wird jeweils hinsichtlich des Abstandes ihrer parallel zueinander verlaufende Streifen (a', b', c') bzw. Kanten (A, B, C) in Abhängigkeit der gewünschten optischen Auflösung gewählt.

Die Erfindung ist in ihrer Ausführung nicht auf die vorstehend beschriebenen Ausführungsbeispiele beschränkt. Vielmehr sind innerhalb des Schutzbereichs der Ansprüche 1 und 14 eine Reihe von Varianten denkbar.

**Patentansprüche**

1. Verfahren zur Erkennung von Oberflächenfehlern an Werkstücken oder Bauteilen, insbesondere an lackierten Fahrzeugoberflächen, bei dem mittels einer eine Lichtquelle (11) aufweisenden Projektionsvorrichtung ein Reflexbild in Form eines hellere und dunklere Bildstreifen aufweisenden Gitterbildes auf einer zu prüfenden Oberfläche (1) erzeugt, das Gitterbild mittels mindestens einer Kameravorrichtung (10) erfasst und die von der Kameravorrichtung erfasste Gestalt des Gitterbildes als Messsignal einer Rechneranlage (13) zugeführt wird, wobei das Gitterbild mit mindestens einer dreidimensionalen optischen Struktur (3, 9, 17) erzeugt wird, die parallel zueinander verlaufende Streifen (a', b', c') oder Kanten (A, B, C) aufweist, welche zueinander einen definierten Abstand besitzen, wobei der Abstand der Bildstreifen des Gitterbildes gemessen und in der Rechneranlage (13) auf der Grundlage des definierten Abstandes der parallelen Streifen (a', b', c') oder Kanten (A, B, C) die Oberflächenstruktur der zu prüfenden Oberfläche (1) berechnet wird, und wobei in der Rechneranlage (13) auf der Grundlage des Messsignals oberflächenfehler bestimmt und/oder durch Vergleich mit mindestens einem gespeicherten Referenzmuster als relevante, eine Nachbearbeitung erfordernde Oberflächenfehler erkannt werden,
**dadurch gekennzeichnet, dass**
die optische Struktur (3, 9, 17) um definierte Drehwinkel gedreht wird, so dass sich der Abstand von den parallelen Streifen (a', b', c') oder Kanten (A, B, C) der optischen Struktur (3, 9, 17) zugeordneten Bildstreifen des Gitterbildes zueinander verändert, wobei der jeweils eingestellte Drehwinkel erfasst wird.

2. Verfahren nach Anspruch 1,
**dadurch gekennzeichnet, dass** als optische Struktur zur Erzeugung des Gitterbildes mindestens ein Prisma (3) oder mindestens eine Prismenplatte (9) verwendet wird.

3. Verfahren nach Anspruch 2,
**dadurch gekennzeichnet, dass** das Prisma (3) beziehungsweise die Prismen der Prismenplatte (9) jeweils zwei rechtwinklig zueinander angeordnete Kantenflächen aufweist/aufweisen.

4. Verfahren nach Anspruch 1,
**dadurch gekennzeichnet, dass** als optische Struktur (17) zur Erzeugung des Gitterbildes ein aus Glas oder lichtdurchlässigem Kunststoff hergestellter Körper verwendet wird, der parallel zueinander verlaufende Streifen (a', b', c') aus lichtundurchlässigem Material aufweist, die in unterschiedlichen Ebenen angeordnet sind.

5. Verfahren nach Anspruch 1 oder 4,
**dadurch gekennzeichnet, dass** die Streifen der optischen Struktur aus mindestens drei räumlich angeordneten dünnen Drähten, Fäden oder Seilen gebildet sind, welche parallel zueinander verlaufen und deren Längsachsen die Eckpunkte eines rechtwinkligen Dreiecks definieren.

6. Verfahren nach einem der Ansprüche 1 bis 5,
**dadurch gekennzeichnet, dass** die das Gitterbild erzeugende optische Struktur (3, 9, 17) über einen schwenkbereich von mindestens 45° in Bezug auf die zu prüfende Oberfläche (1) gedreht wird.

7. Verfahren nach einem der Ansprüche 1 bis 6,
**dadurch gekennzeichnet, dass** die das Gitterbild erzeugende optische Struktur (3, 9, 17) in Bezug auf die zu prüfende Oberfläche (1) um eine erste Achse (18) und um eine dazu querverlaufende zweite Achse (19) jeweils über einen Schwenkbereich von mindestens 45° gedreht wird.

8. Verfahren nach einem der Ansprüche 1 bis 7,
**dadurch gekennzeichnet, dass** als Lichtquelle (11) eine Stroboskopleuchte verwendet wird.

9. Verfahren nach einem der Ansprüche 1 bis 8,
**dadurch gekennzeichnet, dass** errechnete geometrische Daten der zu prüfenden Oberfläche auf einer Anzeigevorrichtung (16) angezeigt werden.

10. Verfahren nach einem der Ansprüche 1 bis 9,
**dadurch gekennzeichnet, dass** eine Referenzmessung durchgeführt wird, bei der als Referenzmuster ein glatter homogener Spiegel, ein Werkstück oder Bauteil mit einer fehlerfreien Oberfläche verwendet wird.

11. verfahren nach einem der Ansprüche 1 bis 10,
**dadurch gekennzeichnet, dass** in der Kameravorrichtung (10) ein an die Größe und/oder Form eines zu erfassenden Oberflächenfehlers anpassbares Berechnungsgitter (BG) automatisch eingestellt wird.

12. Verfahren nach Anspruch 11
**dadurch gekennzeichnet, dass** die Gitterteilung des Berechnungsgitters (BG) in Abhängigkeit der Länge der Beugung von Bildstreifen des Gitterbildes eingestellt wird.

13. Verfahren nach einem der Ansprüche 1 bis 12;
**dadurch gekennzeichnet, dass**
die optische Struktur hinsichtlich des Abstandes ihrer parallel zueinander verlaufende Streifen (a', b', c') oder Kanten (A, B, C) in Abhängigkeit einer gewünschten optischen Auflösung gewählt wird.

14. Vorrichtung zur Erkennung von Oberflächenfehlern an Werkstücken, insbesondere an lackierten Fahrzeugoberflächen, mit

- einer eine Lichtquelle (11) aufweisenden Projektionsvorrichtung, die mit mindestens einer optischen Struktur (3, 9) ausgestattet ist, mittels welcher ein Gitterbild aus helleren und dunkleren Bildstreifen auf einer zu prüfenden Oberfläche (1) erzeugbar ist,
- mindestens einer auf die zu prüfende Oberfläche gerichteten Kameravorrichtung (10) zur Erfassung des reflektierten Lichtes als Abbildung des Gitterbildes unter einem definierten Winkel und zur Abgabe eines entsprechenden Messsignals, und
- einer mit der Projektionsvorrichtung und der Kameravorrichtung (10) verbundenen Rechneranlage (13) zur Auswertung des von der Kameravorrichtung abgegebenen Messsignals zur Bestimmung relevanter, nachzubearbeitender Oberflächenfehler,

wobei die optische Struktur (3, 9), mittels welcher ein Gitterbild aus helleren und dunkleren Bildstreifen auf der zu prüfenden Oberfläche (1) erzeugbar ist, parallel zueinander verlaufende, einen definierten Abstand zueinander aufweisende Streifen oder Kanten (A, B, C) besitzt, und wobei die Rechneranlage (13) geeignet ist zur Ermittlung des Abstandes der Bildstreifen des Gitterbildes und zur Berechnung der Oberflächenstruktur der zu prüfenden Oberfläche (1) auf der Grundlage des definierten Abstandes der parallelen Streifen oder Kanten (A, B, C) der optischen Struktur (3, 9),
**dadurch gekennzeichnet, dass**
die optische Struktur (3, 9) in Bezug auf die zu prüfende. Oberfläche, (1) räumlich verstellbar ist zur Veränderung des Abstandes von Bildstreifen des Gitterbildes, die den parallelen Streifen oder Kanten (A, B, C) der optischen Struktur (3, 9) zugeordnet sind, und dass die Vorrichtung Mittel zur Verstellung der optischen Struktur (3, 9) um definierte Drehwinkel und zur Erfassung des jeweils eingestellten Drehwinkels umfasst.

15. vorrichtung nach Anspruch 14,
**dadurch gekennzeichnet, dass** die optische Struktur zur Erzeugung des Gitterbildes ein Prisma (3) oder eine Prismenplatte (9) ist.

16. Vorrichtung nach Anspruch 15,
**dadurch gekennzeichnet, dass** das Prisma (3) beziehungsweise die Prismen der Prismenplatte (9) jeweils zwei rechtwinklig zueinander angeordnete Kantenflächen aufweist/aufweisen.

17. Vorrichtung nach Anspruch 14,
**dadurch gekennzeichnet, dass** die optische Struktur zur Erzeugung des Gitterbildes ein aus Glas oder lichtdurchlässigem Kunststoff hergestellter Körper (17) ist, der parallel zueinander verlaufende Streifen (a', b', c') aus lichtundurchlässigem Material aufweist, die in unterschiedlichen Ebenen angeordnet sind.

18. Vorrichtung nach Anspruch 14,
**dadurch gekennzeichnet, dass** die Streifen der optischen Struktur aus mindestens drei räumlich angeordneten dünnen Drähten, Fäden oder Seilen gebildet sind, welche parallel zueinander verlaufen, wobei deren Längsachsen die Eckpunkte eines rechtwinkligen Dreiecks definieren.

19. Vorrichtung nach einem der Ansprüche 14 bis 18, umfassend einen Antrieb, mit dem die optische Struktur (3, 9, 17) um definierte Drehwinkel verstellbar ist,
**dadurch gekennzeichnet, dass** die optische Struktur (3, 9, 17) mit dem Antrieb verbunden ist.

20. Vorrichtung nach einem der Ansprüche 14 bis 19,
**dadurch gekennzeichnet, dass** die das Gitterbild erzeugende optische Struktur (3, 9, 17) über einen Schwenkbereich von mindestens 45° verstellbar ist,

21. Vorrichtung nach einem der Ansprüche 14 bis 20,
**dadurch gekennzeichnet, dass** die Lichtquelle (11) eine Stroboskopleuchte ist.

22. Vorrichtung nach einem der Ansprüche 14 bis 21, umfassend eine Anzeigevorrichtung (16), auf der errechnete geometrische Daten der zu prüfenden Oberfläche (1) anzeigbar sind,
**dadurch gekennzeichnet, dass** die Rechneranlage mit der Anzeigevorrichtung (16) verbunden ist.

23. Vorrichtung nach einem der Ansprüche 14 bis 22,
**dadurch gekennzeichnet, dass** die Rechneranlage einen Speicher aufweist, in welchem die Daten eines eine fehlerfreie Oberfläche repräsentierenden Referenzmusters gespeichert sind.

24. Vorrichtung nach einem der Ansprüche 14 bis 23,
**dadurch gekennzeichnet, dass** die Kameravorrichtung (10) ein an die Größe und/oder Form eines zu erfassenden Oberflächenfehlers anpassbares Berechnungsgitter (BG) definiert.

**25.** Vorrichtung nach Anspruch 24,
**dadurch gekennzeichnet, dass** die Gitterteilung des Berechnungsgitters (BG) einstellbar ist.


**Claims**

**1.** A method for detecting surface defects on workpieces or components, in particular on painted vehicle surfaces, wherein a reflected image is generated by means of a projection device having a light source (11) in the form of a grid image having brighter and darker image strips on a surface (1) to be tested, the grid image is recorded by means of at least one camera device (10), and the shape of the grid image recorded by the camera device is fed as a measuring signal to a computer system (13), wherein the grid image is generated with at least one three-dimensional optical structure (3, 9, 17) which has strips (a', b', c') or edges (A, B, C) running parallel with each other, which strips or edges are located at a defined distance from each other, wherein the distance between the image strips of the grid image is measured and the surface structure of the surface (1) to be tested is calculated in the computer system (13) on the basis of the defined distance between the parallel strips (a', b', c') or edges (A, B, C), and wherein surface defects are determined in the computer system (13) on the basis of the measuring signal and/or are detected by comparison with at least one stored reference pattern as relevant surface defects requiring re-machining, **characterised in that** the optical structure (3, 9, 17) is rotated by defined angles of rotation so that the distance between the image strips of the grid image assigned to the parallel strips (a', b', c') or edges (A, B, C) of the optical structure (3, 9, 17) varies, wherein the set angle of rotation is recorded in each case.

**2.** The method according to Claim 1, **characterised in that** at least one prism (3) or at least one prism plate (9) is used as the optical structure for generating the grid image.

**3.** The method according to Claim 2, **characterised in that** the prism (3) or the prisms of the prism plate (9) has/have two edge surfaces arranged at right angles to each other.

**4.** The method according to Claim 1, **characterised in that** a body manufactured from glass or light permeable plastic is used as the optical structure (17) for generating the grid image, which body has strips (a', b', c') of material impermeable to light running parallel with each other, which strips are arranged in different planes.

**5.** The method according to Claim 1 or 4, **characterised in that** the strips of the optical structure are formed from at least three spatially arranged thin wires, threads or ropes which run parallel with each other, and whose longitudinal axes define the corner points of a right-angled triangle.

**6.** The method according to any one of Claims 1 to 5, **characterised in that** the optical structure (3, 9, 17) generating the grid image is rotated across a swivel range of at least 45° in relation to the surface (1) to be tested.

**7.** The method according to one of Claims 1 to 6, **characterised in that** the optical structure (3, 9, 17) generating the grid image is rotated in relation to the surface (1) to be tested about a first axis (18) and about a second axis (19) running transversely to the first axis across a swivel range of at least 45°.

**8.** The method according to any one of Claims 1 to 7, **characterised in that** a stroboscopic light is used as the light source (11).

**9.** The method according to any one of Claims 1 to 8, **characterised in that** calculated geometric data of the surface to be tested are displayed on a display device (16).

**10.** The method according to any one of Claims 1 to 9, **characterised in that** a reference measurement is carried out, wherein a smooth homogeneous mirror, a workpiece of component with a defect-free surface, is used as the reference pattern.

**11.** The method according to any one of Claims 1 to 10, **characterised in that** a calculation grid (BG) that can be adapted to the size and/or shape of a surface defect to be recorded is set automatically in the camera device (10).

**12.** The method according to Claim 11, **characterised in that** the grid division of the calculation grid (BG) is set according to the length of diffraction of image strips of the grid image.

13. The method according to any one of Claims 1 to 12, **characterised in that** the optical structure is selected in respect of the distance between their strips (a', b', c') or edges (A, B, C) running parallel with each other, dependent on a desired optical resolution.

14. A device for detecting surface defects on workpieces, in particular painted vehicle surfaces, with

   - a projection device having a light source (11), which projection device is equipped with at least one optical structure (3, 9) by means of which a grid image of brighter and darker image strips can be generated on a surface to be tested (1),
   - at least one camera device (10) directed onto the surface to be tested for recording the reflected light as an illustration of the grid image at a defined angle, and for transmitting a corresponding measuring signal, and
   - a computer system (13) connected to the projection device and the camera device (10), for evaluating the measuring signal transmitted by the camera device for determining relevant surface defects that must be re-machined, wherein the optical structure (3, 9), by means of which a grid image of brighter and darker image strips can be generated on the surface (1) to be tested, has strips or edges (A, B, C) running parallel with each other and located at a defined distance from each other, and wherein the computer system (13) is suitable for determining the distance between the image strips of the grid image and for calculating the surface structure of the surface (1) to be tested on the basis of the defined distance between the parallel strips or edges (A, B, C) of the optical structure (3, 9), **characterised in that** the optical structure (3, 9) is spatially adjustable, in relation to the surface (1) to be tested, for varying the distance between the image strips of the grid image which are assigned to the parallel strips or edges (A, B, C) of the optical structure (3, 9), and **in that** the device comprises means for adjusting the optical structure (3, 9) about defined angles of rotation and for recording the set angle of rotation.

15. The device according to Claim 14, **characterised in that** the optical structure for generating the grid image is a prism (3) or a prism plate (9).

16. The device according to Claim 15, **characterised in that** the prism (3) or prisms of the prism plate (9) each has/have two edge surfaces arranged at right angles to each other.

17. The device according to Claim 14, **characterised in that** the optical structure for generating the grid image is a body (17) manufactured from glass or light permeable plastic, which body has strips (a', b', c') of material impermeable to light which are arranged in different planes.

18. The device according to Claim 14, **characterised in that** the strips of the optical structure are formed from at least three spatially arranged thin wires, threads or ropes which run parallel with each other, wherein their longitudinal axes define the corner points of a right-angled triangle.

19. The device according to any one of Claims 14 to 18, comprising a drive with which the optical structure (3, 9, 17) is adjustable about defined angles of rotation, **characterised in that** the optical structure (3, 9, 17) is connected to the drive.

20. The device according to any one of Claims 14 to 19, **characterised in that** the optical structure (3, 9, 17) generating the grid image is adjustable across a swivel range of at least 45°.

21. The device according to any one of Claims 14 to 20, **characterised in that** the light source (11) is a stroboscopic light.

22. The device according to any one of claims 14 to 21, comprising a display device (16) on which calculated geometric data of the surface (1) to be tested can be displayed, **characterised in that** the computer system is connected to the display device (16).

23. The device according to any one of Claims 14 to 22, **characterised in that** the computer system has a memory in which the data of a reference pattern representing a defect-free surface are stored.

24. The device according to any one of Claims 14 to 23, **characterised in that** the camera device (10) defines a calculation grid (BG) that can be adapted to the size and/or shape of a surface defect to be recorded.

25. The device according to Claim 24, **characterised in that** the grid division of the calculation grid (BG) is adjustable.

**Revendications**

1. Procédé de détection de défauts de surface sur des pièces ou des composants, en particulier sur des surfaces peintes de véhicules, dans lequel on produit, au moyen d'un dispositif de projection comportant une source de lumière (11), une image réflexe sous la forme d'une image en grille présentant une bande d'image plus claire et une bande d'image plus sombre, sur une surface (1) à contrôler, l'image en grille est prise au moyen d'au moins un dispositif à caméra (10) et la forme de l'image en grille, détectée par le dispositif à caméra, est amenée à un système de calcul (13) sous la forme d'un signal de mesure, l'image en grille étant produite avec au moins une structure optique (3, 9, 17) tridimensionnelle qui présente des bandes (a, b, c,) ou des bords (A, B, C) s'étendant parallèlement les uns aux autres qui présentent un écartement défini, l'écartement des bandes de l'image en grille étant mesuré et, dans le système de calcul (13), la structure superficielle de la surface (1) à contrôler étant calculée sur la base de l'écartement défini des bandes (a', b', c') ou des bords (A, B, C) parallèles, et dans le système de calcul (13) des défauts de surface étant déterminés sur la base du signal de mesure et/ou reconnus, par comparaison avec au moins un modèle de référence mémorisé, comme étant des défauts de surface importants, nécessitant une rectification, **caractérisé en ce que** la structure optique (3, 9, 17) est tournée d'un angle de rotation défini, ce qui fait que l'écartement des bandes (a', b', c') ou bords (A, B, C) parallèles des bandes d'image, associées à la structure optique (3, 9, 17), de l'image en grille, est modifié, l'angle de rotation réglé dans chaque cas étant relevé.

2. Procédé selon la revendication 1, **caractérisé en ce qu'**on utilise comme structure optique, pour produire l'image en grille, au moins un prisme (3) ou au moins une plaque à prismes (9).

3. Procédé selon la revendication 2,
   **caractérisé en ce que** le prisme (3) ou les prismes de la plaque à prismes (9) présente/présentent chacun deux surfaces de bord disposées à angle droit l'une par rapport à l'autre.

4. Procédé selon la revendication 1,
   **caractérisé en ce qu'**on utilise comme structure optique (17), pour produire l'image en grille, un corps fabriqué en verre ou en matière plastique transparente, qui présente des bandes (a', b', c') s'étendant parallèlement les unes aux autres en un matériau non transparent, qui sont disposées dans des plans différents.

5. Procédé selon la revendication 1 ou 4,
   **caractérisé en ce que** les bandes de la structure optique sont formées par au moins trois fils métalliques fins, fils ou cordes disposés dans l'espace, qui s'étendent parallèlement les uns aux autres et dont les axes longitudinaux définissent les angles d'un triangle rectangle.

6. Procédé selon l'une des revendications 1 à 5,
   **caractérisé en ce que** la structure optique (3, 9, 17), produisant l'image en grille, est tournée sur une plage de pivotement d'au moins 45°, par rapport à la surface (1) à contrôler.

7. Procédé selon l'une des revendications 1 à 6,
   **caractérisé en ce que** la structure optique (3, 9, 17) produisant l'image en grille est tournée sur une plage de pivotement d'au moins 45°, par rapport à la surface (1) à contrôler, autour d'un premier axe (18) et autour d'un deuxième axe (19) s'étendant transversalement à celui-ci.

8. Procédé selon l'une des revendications 1 à 7,
   **caractérisé en ce qu'**on utilise comme source de lumière (11) une lumière stroboscopique.

9. Procédé selon l'une des revendications 1 à 8,
   **caractérisé en ce que** les données géométriques calculées de la surface à contrôler sont affichées sur un dispositif d'affichage (16).

10. Procédé selon l'une des revendications 1 à 9,
    **caractérisé en ce qu'**il est procédé à une mesure de référence pour laquelle on utilise comme modèle de référence un miroir homogène lisse, une pièce ou un composant avec un défaut de surface.

11. Procédé selon l'une des revendications 1 à 10,
    **caractérisé en ce que** dans le dispositif à caméra (10) on règle automatiquement une grille de calcul (BG) pouvant être adaptée à la taille et/ou à la forme d'un défaut de surface à détecter.

**12.** Procédé selon la revendication 11,
**caractérisé en ce que** le pas de la grille de calcul (BG) est réglé en fonction de la longueur de la courbure de bandes d'image de l'image en grille.

**13.** Procédé selon l'une des revendications 1 à 12,
**caractérisé en ce que** la structure optique est choisie, en ce qui concerne l'écartement de ses bandes (a', b', c') ou bords (A, B, C), s'étendant parallèlement les uns aux autres, en fonction d'une résolution optique souhaitée.

**14.** Dispositif de détection de défauts de surface sur des pièces, en particulier des surfaces peintes de véhicules, comportant

- un dispositif de projection comportant une source de lumière (11), lequel est équipé d'au moins une structure optique (3, 9) au moyen de laquelle on peut produire une image en grille constituée de bandes d'image plus claires et plus sombres, sur une surface (1) à contrôler,
- au moins un dispositif à caméra (10), dirigé vers la surface à contrôler, pour détecter la lumière réfléchie en tant que reproduction de l'image en grille sous un angle défini et pour délivrer un signal de mesure correspondant, et
- un système de calcul (13), relié au dispositif de projection et au dispositif à caméra (10), pour l'exploitation du signal de mesure, délivré par le dispositif à caméra, pour la détermination de défauts de surface significatifs, à rectifier, la structure optique (3, 9), au moyen de laquelle on peut produire une image en grille constituée de bandes d'image plus claires et plus sombres, sur la surface (1) à contrôler, possédant des bandes ou bords (A, B, C) s'étendant parallèlement les uns aux autres, présentant un écartement défini, et le système de calcul (13) étant propre à déterminer l'écartement des bandes de l'image en grille et à calculer la structure superficielle de la surface (1) à contrôler, sur la base de l'écartement défini des bandes ou bords (A, B, C) parallèles de la structure optique (3, 9),

**caractérisé en ce que** la structure optique (3, 9) est déplaçable dans l'espace, par rapport à la surface (1) à contrôler, pour modifier l'écartement des bandes de l'image en grille qui sont associées aux bandes ou bords (A, B, C) parallèles de la structure optique (3, 9), et **en ce que** le dispositif comprend des moyens pour le déplacement de la structure optique (3, 9) autour d'angles de rotation définis et pour relever l'angle de rotation réglé dans chaque cas.

**15.** Dispositif selon la revendication 14,
**caractérisé en ce que** la structure optique pour produire l'image en grille est un prisme (3) ou une plaque à prismes (9).

**16.** Dispositif selon la revendication 15,
**caractérisé en ce que** le prisme (3) ou les prismes de la plaque à prismes (9) présente/présentent chacun deux surfaces de bord disposées perpendiculairement l'une à l'autre.

**17.** Dispositif selon la revendication 14,
**caractérisé en ce que** la structure optique pour produire l'image en grille est un corps (17) fabriqué en verre ou dans une matière plastique transparente, qui présente des bandes (a', b', c') s'étendant parallèlement les unes aux autres en un matériau non transparent, qui sont disposées dans des plans différents.

**18.** Dispositif selon la revendication 14,
**caractérisé en ce que** les bandes de la structure optique sont formées par au moins trois fils métalliques fins, fils ou cordes disposés dans l'espace, qui s'étendent parallèlement les uns aux autres et dont les axes longitudinaux définissent les angles d'un triangle rectangle.

**19.** Dispositif selon l'une des revendications 14 à 18 comprenant un dispositif d'entraînement par lequel la structure optique (3, 9, 17) peut être déplacée autour d'angles de rotation définis, **caractérisé en ce que** la structure optique (3, 9, 17) est reliée au dispositif d'entraînement.

**20.** Dispositif selon l'une des revendications 14 à 19,
**caractérisé en ce que** la structure optique (3, 9, 17) produisant l'image en grille est déplaçable sur une plage de pivotement d'au moins 45°.

**21.** Dispositif selon l'une des revendications 14 à 20,
**caractérisé en ce que** la source de lumière (11) est une lumière stroboscopique.

**22.** Dispositif selon l'une des revendications 14 à 21, comprenant un dispositif d'affichage (16) sur lequel peuvent être affichées des données géométriques calculées de la surface à contrôler,
**caractérisé en ce que** le système de calcul est relié au dispositif d'affichage (16).

**23.** Dispositif selon l'une des revendications 14 à 22,
**caractérisé en ce que** le système de calcul comporte une mémoire dans laquelle sont mémorisées les données d'un modèle de référence représentant une surface sans défauts.

**24.** Dispositif selon l'une des revendications 14 à 23,
**caractérisé en ce que** le dispositif à caméra (10) définit une grille de calcul (BG) pouvant être adaptée à la taille et/ou à la forme d'un défaut de surface à détecter.

**25.** Dispositif selon la revendication 24,
**caractérisé en ce que** le pas de la grille de calcul (BG) est réglable.

FIG. 1

# FIG. 2

# FIG. 3

$G4 = 58.73$

$G3 = 54.23$

$G2 = 47.93$

$G1 = 46.13$

32.62

$a' = 32.62$

$a'' = 35.22$

$a''' = 45.08$

$a'''' = 52.88$

$b' (b''; b'''; b'''') = 65.23$

$G1 = \sqrt{a' \times b'} = \sqrt{32.62 \times 65.23} = 46.13$

$G2 = \sqrt{a'' \times b''} = \sqrt{35.22 \times 65.23} = 47.93$

$G3 = \sqrt{a''' \times b'''} = \sqrt{45.08 \times 65.23} = 54.23$

$G4 = \sqrt{a'''' \times b''''} = \sqrt{52.88 \times 65.23} = 58.73$

Normal

Minimum

Normal

BG

Beule

# FIG. 4

$$G1 = \sqrt{a' \times b'} = \sqrt{25.03 \times 50.06} = 35.40$$

$$G2 = \sqrt{a'' \times b''} = \sqrt{34.97 \times 50.06} = 41.84$$

$$G3 = \sqrt{a''' \times b'''} = \sqrt{38.46 \times 50.06} = 43.89$$

$$G4 = \sqrt{a'''' \times b''''} = \sqrt{41.77 \times 50.06} = 45.74$$

FIG. 5

a)

b)

c)

d)

# FIG. 6

# FIG. 7

# FIG. 8

# FIG. 9